# FASCICULE DE BREVET EUROPEEN

(11) **EP 4 411 257 B1**
(45) Date de publication et mention de la délivrance du brevet: **10.09.2025**
(21) Numéro de dépôt: 24155851.9
(22) Date de dépôt: 05.02.2024
(51) Int. Cl.: F24D 13/00, F24D 19/10, F24H 3/04, F24H 7/00, F24H 9/1863, F24H 9/20, F24H 15/164, F24H 15/168, F24H 15/174, F24H 15/204, F24H 15/269, F24H 15/277, F24H 15/37, F24H 15/421, F24H 15/429, G05D 23/19, H05B 1/02, H05B 3/20, H05B 3/26

(54) **PROCÉDÉ DE RÉGULATION D'UN APPAREIL DE CHAUFFAGE À DEUX ÉLÉMENTS CHAUFFANTS**
VERFAHREN ZUR REGELUNG EINES HEIZGERÄTES MIT ZWEI HEIZELEMENTEN
METHOD FOR CONTROLLING A HEATING DEVICE WITH TWO HEATING ELEMENTS

(30) Priorité: 06.02.2023 FR 2301095
(43) Date de publication de la demande: 07.08.2024
(73) Titulaire: Intuis & Cie, 92150 Suresnes (FR)
(72) Inventeur: HEMMER, Cédric, 75018 Paris (FR); LEBLANC, Alexandre, 75018 Paris (FR); POURRAT, François, 75018 Paris (FR)
(74) Mandataire: Lavoix

(56) Documents cités:
- EP-B1- 3 324 131
- FR-A1- 3 015 011

## Description

La présente invention concerne un procédé de régulation d'un appareil de chauffage, ledit appareil comprenant : une enveloppe définissant un espace intérieur audit appareil, l'enveloppe comprenant une façade de l'appareil, l'enveloppe comprenant des ouvertures de circulation d'air entre l'espace intérieur et un extérieur de l'appareil ; un premier élément chauffant électrique, disposé dans l'espace intérieur, au contact de la façade, et caractérisé par une première puissance de chauffe ; un corps de chauffe, formé d'un matériau à inertie thermique et disposé dans l'espace intérieur ; un deuxième élément chauffant électrique, en contact thermique avec le corps de chauffe et caractérisé par une deuxième puissance de chauffe, le corps de chauffe étant apte à emmagasiner une chaleur émise par le deuxième élément chauffant et à restituer ladite chaleur à un air extérieur à l'appareil ; et un capteur d'une température dudit air extérieur ; une puissance nominale P₀ de l'appareil de chauffage étant égale à la somme des première et deuxième puissances de chauffe.

Un tel appareil de chauffage est notamment décrit dans le document FR2992052, au nom de la Demanderesse.

Dans de tels appareils comprenant un élément chauffant en façade et un corps de chauffe à inertie, il est connu que les meilleurs résultats, en terme de confort selon l'énergie consommée, sont obtenus par le chauffage par rayonnement en façade.

Cependant, les corps de chauffe à inertie présentent l'avantage d'accumuler de la chaleur et de la restituer progressivement, même en cas de coupure de l'alimentation électrique.

FR3015011 A1 divulgue un procédé de régulation d'un appareil de chauffage par rayonnement et convection combinés selon le préambule de la revendication 1.

Lorsque le réseau électrique se trouve dans une situation de surcharge, présentant des risques de délestage de courte durée, il est donc avantageux de tenir compte de tels risques dans la régulation de l'appareil de chauffage.

A cet effet, l'invention a pour objet un procédé de régulation du type précité, dans lequel un premier seuil α tel que 10% ≤ α ≤ 70% est paramétré dans l'appareil de chauffage ; et le procédé comprend les étapes suivantes : une puissance P de chauffe est déterminée pour l'appareil de chauffage en fonction de la température de l'air extérieur et d'une température de consigne, paramétrée dans l'appareil de chauffage ; si P ≤ αP₀, une priorité de chauffe au premier élément chauffant est mise en oeuvre ; et si P > αP₀, une priorité de chauffe au deuxième élément chauffant est mise en oeuvre ; une priorité de chauffe au n-ième élément chauffant, n étant choisi parmi 1 et 2, étant telle que : si P ≤ Pₙ, seul ledit n-ième élément chauffant est alimenté en électricité ; et si P > Pₙ, ledit n-ième élément chauffant délivre une puissance Pₙ et l'autre des premier et deuxième éléments chauffants délivre une puissance égale à (P - Pₙ).

Suivant d'autres aspects avantageux de l'invention, le procédé de régulation comporte l'une ou plusieurs des caractéristiques suivantes, prises isolément ou suivant toutes les combinaisons techniquement possibles :
- l'appareil de chauffage comporte une horloge apte à déterminer un temps t ; une plage horaire ([t₀ ; t₁]) est paramétrée dans l'appareil de chauffage ; un deuxième seuil β tel que α ≤ β ≤ 100% est paramétré dans l'appareil de chauffage ; et le procédé comporte une étape telle que, si à t = t₀ on a P(t₀) > βP₀, alors, entre t₀ et t₁, la puissance P de chauffe est limitée à ladite valeur P(t₀) ; et l'alimentation en électricité des premier et deuxième éléments chauffants est interrompue au cours d'un nombre k de coupures successives, k étant un nombre entier supérieur ou égal à 1 paramétré dans l'appareil de chauffage ;
- le premier seuil α est proche de ou égal à 40% et le deuxième seuil β est proche de ou égal à 60% ;
- une valeur γ telle que 10% ≤ γ ≤ 50% est paramétrée dans l'appareil de chauffage, de sorte qu'durée totale des coupures sur la plage horaire ([t₀ ; t₁]) soit égale à γ(t₁ - t₀) ;
- la valeur γ est comprise entre 20% et 30%, préférentiellement proche de ou égale à 25% ;
- k est un nombre entier supérieur ou égal à 3 ;
- la ou chaque coupure présente une durée par défaut δt₁, paramétrée dans l'appareil de chauffage ; la ou chaque coupure débute à un temps tᵢ₀ avec t₀ ≤ tᵢ₀ < t₁, i étant compris entre 1 et k ; et si à un temps t₃ tel que tᵢ₀ ≤ t₃ ≤ (tᵢ₀ + δt₁), la température mesurée est inférieure ou égale à (Tᵢ₀ - Δ₁T), Tᵢ₀ étant la température au début de la coupure i considérée et Δ₁T étant une valeur paramétrée dans l'appareil de chauffage, alors la ou les éventuelles coupures suivantes sur la plage horaire [t₀ ; t₁] présentent une durée corrigée δt₃, inférieure à la durée par défaut δt₁ ;
- si à un temps t₄ tel que t₀ ≤ t₄ ≤ t₁, la température T mesurée est inférieure ou égale à (Tc - Δ₂T), Δ₂T étant une valeur paramétrée dans l'appareil de chauffage, alors les coupures sont interrompues audit temps t₄ ;
- la ou chaque coupure débute à un temps tᵢ₀ et s'achève par défaut à un temps tᵢ₁, avec t₀ ≤ tᵢ₀ < tᵢ₁ ≤ t₁, i étant compris entre 1 et k ; et si au temps tᵢ₁, la température mesurée est supérieure à (Tᵢ₀ - Δ₃T), Tᵢ₀ étant la température au début de la coupure i considérée et Δ₃T étant une valeur paramétrée dans l'appareil de chauffage, alors la coupure i correspondante est prolongée.

L'invention se rapporte en outre à un appareil de chauffage comprenant : une enveloppe définissant un espace intérieur audit appareil, l'enveloppe comprenant une façade de l'appareil ; l'enveloppe comprenant des ouvertures de circulation d'air entre l'espace intérieur et un extérieur de l'appareil ; un premier élément chauffant électrique, disposé dans l'espace intérieur, au contact de la façade, et caractérisé par une première puissance de chauffe ; un corps de chauffe, formé d'un matériau à inertie thermique et disposé dans l'espace intérieur ; un deuxième élément chauffant électrique, en contact thermique avec le corps de chauffe et caractérisé par une deuxième puissance de chauffe ; le corps de chauffe étant apte à emmagasiner une chaleur émise par le deuxième élément chauffant et à restituer ladite chaleur à un air extérieur à l'appareil ; et un capteur (19) d'une température dudit air extérieur ; ledit appareil étant muni de moyens de mise en oeuvre d'un procédé de régulation tel que décrit ci-dessus.

De manière préférentiel un ratio des puissances de chauffe, du deuxième élément chauffant par rapport au premier élément chauffant, est compris entre 1 et 2, plus préférentiellement proche de ou égal à 1,5.

L'invention sera mieux comprise à la lecture de la description qui va suivre, donnée uniquement à titre d'exemple non limitatif et faite en se référant aux dessins sur lesquels :
[Fig 1] la figure 1 est une vue schématique, en coupe, d'un appareil de chauffage selon un mode de réalisation de l'invention ;
[Fig 2] la figure 2 est un logigramme d'un procédé de régulation de l'appareil de la figure 1 ; et
[Fig 3] [Fig 4] la figure 3 et la figure 4 sont des schémas temporels de procédés de régulation de l'appareil de la figure 1.

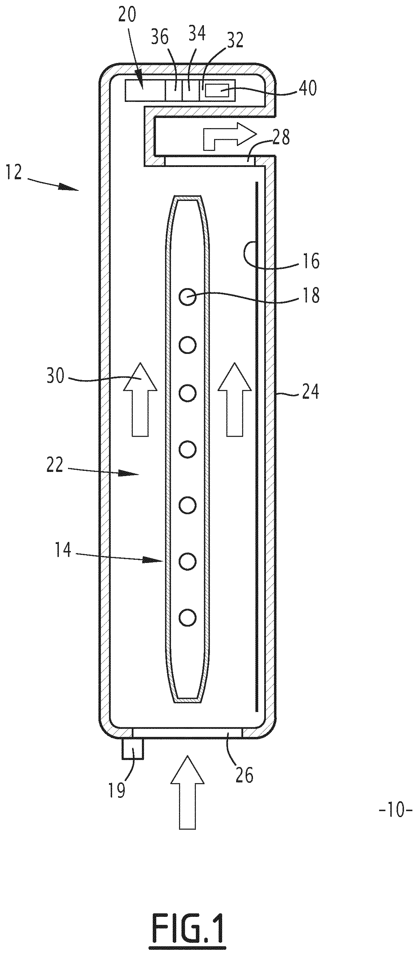

La figure 1 représente schématiquement, en coupe, un appareil 10 de chauffage selon un mode de réalisation de l'invention. De préférence, l'appareil 10 est un appareil de chauffage domestique, ou radiateur. Dans la description qui suit, l'appareil 10 est considéré comme installé dans une pièce d'un bâtiment d'habitation.

L'appareil 10 comprend notamment : une enveloppe 12 ; un corps de chauffe 14 ; un premier 16 et un deuxième 18 éléments chauffants électriques ; un capteur 19 de température et un module 20 électronique de commande.

L'enveloppe 12 définit un espace intérieur 22 à l'appareil 10. L'enveloppe 12 comporte notamment une façade 24, destinée à être disposée sensiblement verticalement, face à la pièce équipée de l'appareil 10.

La façade 24 est réalisée dans un matériau apte à émettre un rayonnement infrarouge sous l'effet d'une augmentation de température. Par exemple, la façade 24 est réalisée dans un métal tel que l'acier, ou encore en verre ou en pierre.

L'enveloppe 12 comporte en outre des ouvertures 26, 28 de circulation d'air. Par exemple, l'enveloppe 12 comporte des ouvertures inférieures 26 et des ouvertures supérieures 28, ménagées respectivement dans une paroi inférieure et dans une paroi supérieure de ladite enveloppe.

Le corps de chauffe 14 est disposé dans l'espace intérieur 22 de l'appareil 10. Plus précisément, le corps de chauffe est disposé de sorte à permettre la circulation d'un flux 30 d'air autour dudit corps de chauffe, ledit flux 30 d'air se déplaçant entre les ouvertures inférieures 26 et supérieures 28 comme décrit ci-après.

Le corps de chauffe 14 est réalisé dans un matériau à inertie thermique, c'est-à-dire un matériau apte à emmagasiner de la chaleur et à la restituer progressivement au flux 30 d'air. Le corps de chauffe 14 est par exemple réalisé dans un métal tel que la fonte.

Le premier élément chauffant 16 électrique est disposé dans l'espace intérieur 22, en contact thermique avec la façade 24, de sorte à transférer de la chaleur à ladite façade. De préférence, le premier élément chauffant 16 est sous la forme d'un film sérigraphié, collé à la façade 24, ou encore d'un fil électrique chauffant plaqué contre ladite façade, comme décrit par exemple dans le document FR2992052 précité.

Le deuxième élément chauffant 18 électrique est en contact thermique avec le corps de chauffe 14, de sorte à transférer de la chaleur audit corps de chauffe. De préférence, le deuxième élément chauffant 18 est sous la forme d'une résistance électrique incorporée dans la masse du corps de chauffe 14, comme décrit dans le document FR2991845 au nom de la Demanderesse.

Les premier 16 et deuxième 18 éléments chauffants sont caractérisés respectivement par une première puissance de chauffe P₁ et par une deuxième puissance de chauffe P₂. Une puissance nominale P₀ de l'appareil 10 de chauffage est égale à la somme P₁ + P₂ des première et deuxième puissances de chauffe.

Plus précisément, P₁ et P₂ correspondent à des puissances maximales de chauffe, délivrées respectivement par le premier 16 et par le deuxième 18 éléments chauffants électriques alimentés en continu en électricité.

Préférentiellement, un ratio P₂/P₁ est compris entre 1 et 2. Par exemple, le ratio P₂/P₁ est de l'ordre de 1,5, le ratio P₂/P₀ étant ainsi de l'ordre de 60%.

Lorsqu'un élément chauffant est sollicité pour délivrer une puissance P' inférieure à sa puissance de chauffe, comme détaillé ci-après, ledit élément chauffant est alimenté en électricité sous forme de cycles temporels courts, de l'ordre de la seconde. Chaque cycle comprend une période p₁ d'alimentation et une période p₂ d'interruption de ladite alimentation. Le ratio τ = p₁/(p₁+p₂) correspond au taux de marche de l'élément chauffant. La puissance P' délivrée par l'élément chauffant de puissance de chauffe Pₙ, n étant choisi entre 1 et 2, est P' = τₙ*Pₙ.

Le capteur 19 de température est situé hors de l'espace intérieur 22 et est apte à mesurer une température T de la pièce équipée de l'appareil 10. Par exemple, le capteur 19 est disposée en entrée du flux 30 d'air, à proximité des ouvertures inférieures 26 de l'enveloppe 12.

Le module 20 électronique de commande est relié au capteur 19 de température et à une alimentation électrique des premier 16 et deuxième 18 éléments chauffants. De préférence, le module 20 est disposé dans l'enveloppe 12. En variante, le module 20 est situé dans un boîtier déporté.

Le module 20 comporte notamment une mémoire 32 de programme, une mémoire 34 de données et une horloge 36.

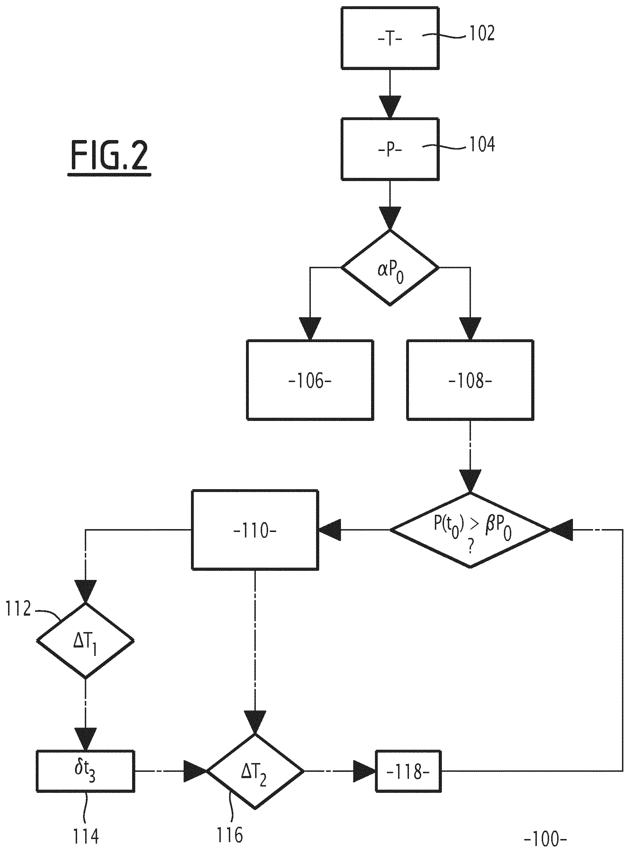

La mémoire 32 de programme mémorise un programme 40 permettant la mise en oeuvre d'un procédé 100 de régulation de l'appareil 10. Le procédé 100, schématiquement représenté sur la figure 2, sera décrit ci-après.

La mémoire 34 de données mémorise notamment un premier seuil α tel que 10% ≤ α ≤ 70%. Plus préférentiellement, le premier seuil α est compris entre 30% et 50%. Encore plus préférentiellement, le premier seuil α est proche de ou égal à 40%.

La mémoire 34 de données mémorise également une température T_{c} de consigne, qui est la température souhaitée de la pièce équipée de l'appareil 10. De préférence, la température T_{c} de consigne peut être modifiée par un utilisateur, au moyen d'une interface reliée au module 20.

L'horloge 36 est apte à mesurer un temps t, notamment sous la forme d'une date et d'une heure. De préférence, l'horloge 36 peut être réglée par un utilisateur, au moyen de l'interface reliée au module 20.

Le procédé 100 de régulation de l'appareil 10 va maintenant être décrit.

Dans une première étape 102, la température T de la pièce est mesurée par le capteur 19. Puis (étape 104) une puissance P de chauffe est déterminée par le programme 40, en fonction de la température T mesurée et de la température T_{c} de consigne. La puissance P déterminée est inférieure ou égale à la puissance nominale P₀. Plus précisément, le ratio P/P₀ correspond au taux de marche global de l'appareil 10.

On considère un premier cas, dans lequel la puissance P déterminée est inférieure ou égale à la valeur αP₀, α étant le premier seuil indiqué ci-dessus. Une telle puissance P implique des besoins en chauffage modérés, rendant peu probable la nécessité d'un délestage sur le réseau électrique.

En conséquence, si P ≤ αP₀, une priorité de chauffe au premier élément chauffant 16 est mise en oeuvre (étape 106).

La priorité de chauffe au premier élément chauffant 16 s'applique comme suit : si P ≤ P₁, seul le premier élément chauffant 16 est alimenté en électricité ; et si P > P₁, ledit premier élément chauffant est alimenté en électricité en continu, de sorte à délivrer une puissance P₁ ; et le deuxième élément chauffant 18 est alimenté en électricité de sorte à délivrer une puissance égale à (P - P₁).

Dans une telle configuration, l'appareil 10 chauffe en priorité par rayonnement, la façade 24 émettant des rayons infrarouges dans la pièce sous l'effet d'une augmentation de sa température.

Si P > P₁, le deuxième élément chauffant 18 est également alimenté en électricité et le flux 30 d'air est chauffé par convection thermique, en passant au contact du corps de chauffe 14.

On considère à présent un deuxième cas, dans lequel la puissance P déterminée est supérieure à la valeur αP₀. Une telle puissance P implique des besoins en chauffage importants, caractéristiques des journées les plus froides de l'année. De telles conditions climatiques augmentent la probabilité qu'un délestage sur le réseau électrique soit nécessaire.

En conséquence, si P > αP₀, une priorité de chauffe au deuxième élément chauffant 18 est mise en oeuvre (étape 108).

La priorité de chauffe au deuxième élément chauffant 18 s'applique comme suit : si P ≤ P₂, seul le deuxième élément chauffant 18 est alimenté en électricité ; et si P > P₂, ledit deuxième élément chauffant délivre une puissance P₂ et le premier élément chauffant 16 délivre une puissance égale à (P - P₂).

Dans une telle configuration, l'appareil 10 chauffe en priorité par convection thermique, avec un éventuel complément par rayonnement, notamment si P > P₂. De plus, le deuxième élément chauffant 18 est alimenté en électricité de sorte à accumuler de la chaleur dans le corps de chauffe.

Ainsi, si un délestage sur le réseau électrique intervient après la mise en oeuvre de l'étape 108, le corps de chauffe 14 est en mesure de diffuser par convection la chaleur accumulée, même en l'absence d'alimentation électrique de l'appareil 10. Le confort thermique de la pièce équipée de l'appareil 10 est donc peu dégradé durant le délestage.

Selon un mode de réalisation, le procédé 100 permet en outre de diminuer la consommation électrique de l'appareil 10 à certaines plages horaires. Il s'agit par exemple de plages horaires correspondant statistiquement à une surcharge du réseau électrique.

Selon une première variante non représentée, l'appareil 10 est relié à une unité de contrôle centralisé, apte à envoyer des instructions audit appareil 10 ainsi qu'à d'autres appareils équipant le logement. L'unité de contrôle centralisé est par exemple en mesure de recevoir des instructions de délestage du réseau électrique et de les répercuter à l'appareil 10.

Selon une deuxième variante, représentée sur la figure 2, l'appareil 10 n'est relié à aucune unité de contrôle centralisé et n'est pas configuré pour recevoir des informations sur l'état du réseau électrique. Les plages horaires de diminution de la consommation électrique sont pré-programmées dans le module 20 électronique de commande pour la mise en œuvre du procédé 100.

Selon ladite deuxième variante, au moins une plage horaire [t₀ ; t₁] est mémorisée dans la mémoire 34 de données. Ladite plage horaire est par exemple située entre 18h30 et 20h30, une telle plage horaire correspondant statistiquement à une surconsommation électrique au niveau national. En variante, la mémoire 34 de données mémorise une plage horaire supplémentaire, située le matin.

Selon ladite deuxième variante, la mémoire 34 de données mémorise en outre un deuxième seuil β tel que α ≤ β ≤ 100%. Le deuxième seuil β correspond de préférence à des besoins en chauffage caractéristiques de périodes particulièrement froides, fréquemment associées à des besoins en délestage sur le réseau électrique.

De préférence, β = P₂/P₀, c'est-à-dire que le deuxième seuil β correspond à une sollicitation maximale du deuxième élément chauffant 18. Par exemple, β = 60% pour un premier seuil α de 40%.

Selon ladite deuxième variante, si à t = t₀ on a P(t₀) > βP₀, alors (étape 110), entre t₀ et t₁, la puissance P de chauffe est limitée à ladite valeur P(t₀) ; et l'alimentation en électricité des premier et deuxième éléments chauffants est interrompue au cours d'un nombre k de coupures successives, k étant un entier supérieur ou égal à 1. La valeur de k est mémorisée dans la mémoire 34 de données.

De préférence, le nombre k de coupures est fonction de la durée de la plage horaire [t₀ ; t₁]. Par exemple, le nombre k est choisi conformément au [Table 1] tableau 1 ci-dessous :

**Tableau 1**

| Durée de la plage horaire [t₀ ; t₁] (h) | Nombre k de coupures |
|---|---|
| 1 | 1 |
| 2 | 3 |
| 3 | 5 |
| 4 | 6 |
| 5 | 8 |

Par exemple, la durée totale Δt de coupures d'alimentation sur la plage horaire [t₀ ; t₁] est égale à γ(t₁ - t₀), avec 10% ≤ γ ≤ 50%. Préférentiellement, γ est compris entre 20% et 30%. Plus préférentiellement, γ est proche de ou égal à 25%, le temps total de coupure électrique représentant environ un quart de la durée totale de la plage horaire [t₀ ; t₁].

De préférence, chacune des k coupures successives présente une même durée par défaut δt₁, égale à Δt/k.

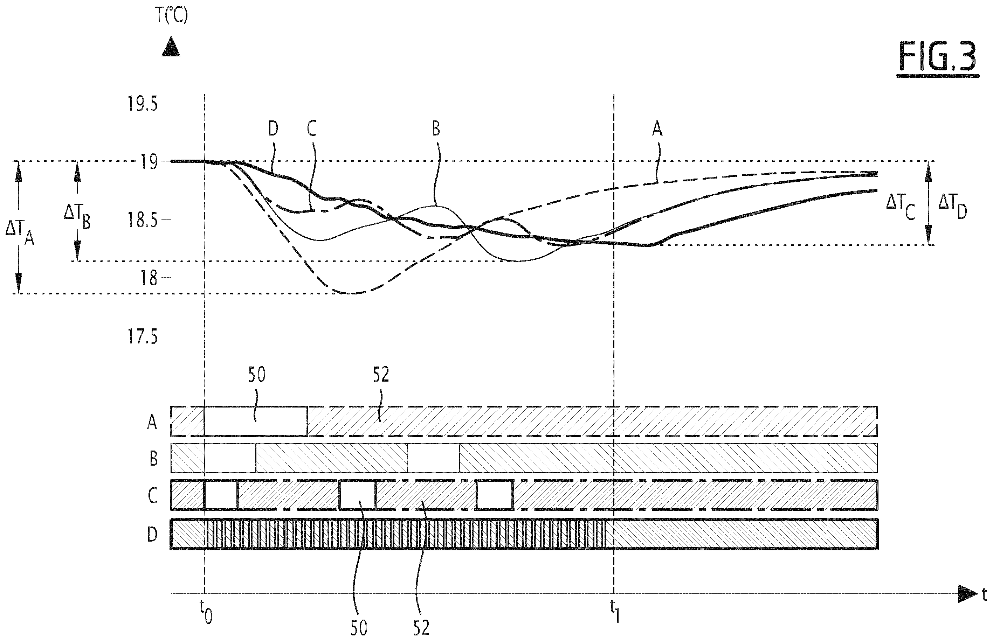

La figure 3 représente schématiquement différents scénarios A, B, C, D de l'étape 110 sur la plage horaire [t₀ ; t₁], ainsi qu'une évolution de la température T de la pièce selon lesdits scénario.

Ainsi, sur la plage horaire [t₀ ; t₁], l'étape 110 comporte au moins une coupure 50, durant laquelle les premier 16 et deuxième 18 éléments chauffants ne sont pas alimentés en électricité, et au moins une période de chauffe 52 durant laquelle les premier 16 et deuxième 18 éléments chauffants sont alimentés en électricité.

Pour chacun des scénarios A, B, C, D, la ou la première coupure 50 débute à t₀ et la ou chaque coupure est suivie d'une période de chauffe 52.

Pour les scénarios A, B et C, le nombre k de coupures 50 successives sur la plage horaire [t₀ ; t₁] est respectivement égal à 1, 2 et 3. Pour le scénario D, sur la plage horaire [t₀ ; t₁], l'étape 110 comporte un nombre élevé de coupures très brèves, de l'ordre de la seconde. Le scénario D correspond sensiblement à une diminution du taux de marche τₙ de chacun des premier et deuxième éléments chauffants sur la plage horaire [t₀ ; t₁].

Pour un scénario A, B, C ou D donné, les coupures ont une même durée δt₁ telle qu'indiquée ci-dessus. De même, pour un scénario A, B, C ou D donné, les périodes de chauffe 52 suivant les coupures 50 ont une même durée égale à (1 - γ)(t₁ - t₀)/k. Dans l'exemple de la figure 3, γ = 25%.

Comme indiqué précédemment, durant l'au moins une période de chauffe 52, la puissance P délivrée par l'appareil de chauffage est limitée à la valeur P(t₀). On évite ainsi un chauffage excessif durant la ou les périodes de chauffe 52 suivant une coupure 50.

La figure 3 montre également des résultats expérimentaux correspondant à une évolution de la température T en fonction du temps, selon le scénario A, B, C ou D.

Dans le scénario A, comprenant une seule coupure 50 suivie d'une seule période de chauffe 52 sur la plage horaire [t₀ ; t₁], la température de la pièce considérée subit une baisse maximale ΔT_{A} de 1,1°C au cours de la coupure.

Dans les scénarios B et C, les baisses maximales ΔT_{B} et ΔT_{C} de la température T sont respectivement de 0,9°C et de 0,7°C. Dans le scénario D, la baisse maximale ΔT_{D} est également de 0,7°C.

Afin de limiter la baisse de température sur la plage horaire [t₀ ; t₁], il semble donc avantageux de choisir une valeur de k supérieure ou égale à 3.

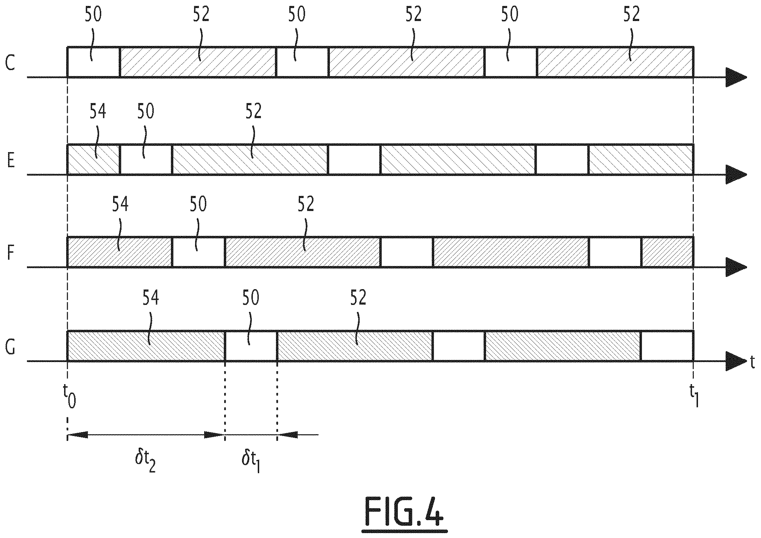

La figure 4 représente schématiquement le scénario C susmentionné, ainsi que des scénarios E, F et G de l'étape 110 sur la plage horaire [t₀ ; t₁].

Dans l'exemple de la figure 4, on a γ = 25% et k = 3 pour chacun des scénarios C, E, F, G.

Chacun des scénarios E, F et G comporte une période de chauffe initiale 54, débutant à t₀. La période de chauffe initiale 54 a une durée δt₂ non nulle, mémorisée dans la mémoire 34 de données et inférieure ou égale à (1 - γ)(t₁ - t₀)/k. Dans l'exemple des scénarios E, F, G de la figure 4, la période de chauffe initiale 54 de chacun desdits scénarios a une durée δt₂ spécifique, égale à mδt₁, m étant un entier compris entre 1 et 3. Ainsi, les coupures 50 des scénarios C, E, F et G n'interviennent pas aux mêmes moments sur la plage horaire [t₀ ; t₁].

Dans un mode de réalisation, la valeur de δt₂ est choisie de manière aléatoire lors de la fabrication de l'appareil 10. Par exemple, la valeur de δt₂ est choisie égale à jδt₁, j étant un entier compris entre 0 et 3 choisi aléatoirement, de sorte à appliquer audit appareil l'un des scénarios C, E, F et G. Ainsi, dans le cas d'un logement comprenant plusieurs appareils 10, les coupures 50 peuvent intervenir à des moments différents sur la plage horaire [t₀ ; t₁], pour un meilleur confort thermique dans le logement.

En variante, la valeur de δt₂ ou de j est paramétrée au moment d'une installation de l'appareil 10 dans le logement. Plusieurs valeurs différentes de δt₂ peuvent ainsi être choisies pour différents appareils 10 équipant le même logement.

En deuxième variante, dans le cas d'appareil communicants entre eux dans une même pièce, la valeur de δt₂ ou de j peut être attribuée par l'appareil maître du protocole de communication.

Selon un mode de réalisation, le procédé 100 est configuré pour limiter la dégradation du confort thermique sur la plage horaire [t₀ ; t₁] de diminution de la consommation électrique de l'appareil 10.

Selon un tel mode de réalisation, on considère que chacune des k coupures 50 intervenant sur la plage horaire [t₀ ; t₁] débute à un temps tᵢ₀, i étant compris entre 1 et k. Par défaut, chacune desdites coupures s'achève à un temps (tᵢ₀ + δt₁), δt₁ étant la durée par défaut de chaque coupure, définie précédemment.

Pendant chaque coupure 50, soit sur chaque plage [tᵢ₀ ; tᵢ₀ + δt₁], la température T est contrôlée par le capteur 19 et comparée (étape 112) à une valeur (Tᵢ₀ - Δ₁T), Tᵢ₀ étant la température au début de la coupure i considérée et Δ₁T étant un premier écart de température mémorisé dans la mémoire 34 de données. Par exemple, Δ₁T = 0,3 °C.

Si à un temps t₃ tel que tᵢ₀ ≤ t₃ ≤ (tᵢ₀ + δt₁), la température T est inférieure à (Tᵢ₀ - Δ₁T), alors les coupures 50 de la plage horaire [t₀ ; t₁] intervenant à partir du temps t₃ présentent une durée corrigée δt₃, inférieure à la valeur par défaut δt₁ (étape 114). De préférence, le programme 40 définit δt₃ comme un pourcentage de δt₁ ; par exemple, δt₃ = 0,8*δt₁.

Selon un autre mode de réalisation, sur la plage horaire [t₀ ; t₁], la température T contrôlée par le capteur 19 est comparée (étape 116) à une valeur (T_{c} - Δ₂T), Δ₂T étant un deuxième écart de température mémorisé dans la mémoire 34 de données, avec Δ₂T>Δ₁T. Par exemple, Δ₂T = 1,0 °C.

Si à un temps t₄ tel que t₀ ≤ t₄ ≤ t₁, la température T est inférieure à (Tc - Δ₂T), alors l'étape 110 est interrompue (étape 118) audit temps t₄.

Le procédé 100 évite ainsi une baisse trop importante de la température T par rapport à la température de consigne au cours de l'étape 110.

De préférence, l'étape 110 est également interrompue avant le temps t₁ si la température de consigne T_{c} est modifiée par l'utilisateur durant la plage horaire [t₀ ; t₁].

Selon un autre mode de réalisation, le procédé 100 est configuré pour optimiser la diminution de la consommation électrique de l'appareil 10 en fonction du confort thermique sur la plage horaire [t₀ ; t₁].

Selon un tel mode de réalisation (non représenté), on considère que chacune des k coupures intervenant sur la plage horaire [t₀ ; t₁] débute à un temps tᵢ₀ et s'achève à un temps tᵢ₁, i étant compris entre 1 et k. Par exemple, tᵢ₁ = tᵢ₀ + δt₁.

Pour chaque coupure i considérée, la température Tᵢ₁ en fin de coupure est contrôlée par le capteur 19 et comparée à une valeur (Tᵢ₀- Δ₃T), Tᵢ₀ étant la température au début de la coupure i considérée et Δ₃T étant un troisième écart de température mémorisé dans la mémoire 34 de données. Par exemple, Δ₃T = 0,1 °C.

Si la température Tᵢ₁ en fin de coupure est supérieure à (Tᵢ₀- Δ₃T), alors la coupure en cours est prolongée jusqu'à un temps t₅ supérieur à tᵢ₁. Par exemple, t₅ est tel que t₀ ≤ t₅ ≤ t₁ et correspond à une température mesurée T₅ inférieure ou égale à (Tᵢ₀- Δ₃T). En variante, la prolongation de la coupure i considérée est limitée, de sorte à conserver t₅ inférieur ou égal à (tᵢ₁ + δt₄), δt₄ étant une valeur mémorisée dans la mémoire 34 de données.

Le procédé 100 permet ainsi de favoriser le chauffage par rayonnement, plus efficace, durant les périodes à besoins de chauffage modérés ; et d'anticiper un délestage électrique durant les périodes à besoins de chauffage élevés.

De manière préférée, le procédé 100 permet de diminuer ponctuellement la consommation électrique de l'appareil 10 durant les périodes à besoins de chauffage élevés ou très élevés, même en l'absence de délestage sur le réseau électrique. Les pics journaliers de consommation peuvent ainsi être lissés.

## Revendications

1. Procédé (100) de régulation d'un appareil (10) de chauffage, ledit appareil comprenant :
- une enveloppe (12) définissant un espace intérieur (22) audit appareil, l'enveloppe comprenant : une façade (24) ; et des ouvertures (26, 28) de circulation d'air entre l'espace intérieur et un extérieur de l'appareil ;
- un premier élément chauffant (16) électrique, disposé dans l'espace intérieur, au contact de la façade (24), et **caractérisé par** une première puissance (P₁) de chauffe ;
- un corps de chauffe (14), formé d'un matériau à inertie thermique et disposé dans l'espace intérieur ;
- un deuxième élément chauffant (18) électrique, en contact thermique avec le corps de chauffe (14) et **caractérisé par** une deuxième puissance (P₂) de chauffe ;
le corps de chauffe étant apte à emmagasiner une chaleur émise par le deuxième élément chauffant et à restituer ladite chaleur à un air extérieur à l'appareil ; et
- un capteur (19) d'une température (T) dudit air extérieur ;
une puissance nominale (P₀) de l'appareil de chauffage étant égale à la somme des première et deuxième puissances de chauffe ;
le procédé étant **caractérisé en ce que** : un premier seuil α tel que 10% ≤ α ≤ 70% est paramétré dans l'appareil de chauffage ; et le procédé comprend les étapes suivantes :
- une puissance (P) de chauffe est déterminée (104) pour l'appareil de chauffage en fonction de la température (T) de l'air extérieur et d'une température de consigne (T_{c}), paramétrée dans l'appareil de chauffage ;
- si P ≤ αP₀, une priorité de chauffe au premier élément chauffant est mise en oeuvre (106) ; et
- si P > αP₀, une priorité de chauffe au deuxième élément chauffant est mise en œuvre (108) ;
une priorité de chauffe au n-ième élément chauffant, n étant choisi parmi 1 et 2, étant telle que : si P ≤ Pₙ, seul ledit n-ième élément chauffant est alimenté en électricité ; et si P > Pₙ, ledit n-ième élément chauffant délivre une puissance Pₙ et l'autre des premier et deuxième éléments chauffants délivre une puissance égale à (P - Pₙ).

2. Procédé de régulation selon la revendication 1, dans lequel :
- l'appareil de chauffage comporte une horloge (36) apte à déterminer un temps (t) ;
- une plage horaire ([t₀ ; t₁]) est paramétrée dans l'appareil de chauffage ;
- un deuxième seuil β tel que α ≤ β ≤ 100% est paramétré dans l'appareil de chauffage ; et
- le procédé comporte une étape (110) telle que, si à t = t₀ on a P(t₀) > βP₀, alors, entre t₀ et t₁, la puissance (P) de chauffe est limitée à ladite valeur P(t₀) ; et l'alimentation en électricité des premier et deuxième éléments chauffants est interrompue au cours d'un nombre k de coupures successives, k étant un nombre entier supérieur ou égal à 1 paramétré dans l'appareil de chauffage.

3. Procédé de régulation selon la revendication 2, dans lequel le premier seuil α est proche de ou égal à 40% et le deuxième seuil β est proche de ou égal à 60%.

4. Procédé de régulation selon la revendication 2 ou 3, dans lequel une valeur γ telle que 10% ≤ γ ≤ 50% est paramétrée dans l'appareil de chauffage, de sorte qu'durée totale (Δt) des coupures sur la plage horaire ([t₀ ; t₁]) soit égale à γ(t₁ - t₀).

5. Procédé de régulation selon la revendication 4, dans lequel la valeur γ est comprise entre 20% et 30%, préférentiellement proche de ou égale à 25%.

6. Procédé de régulation selon l'une des revendications 2 à 5, dans lequel k est un nombre entier supérieur ou égal à 3.

7. Procédé de régulation selon l'une des revendications 2 à 6, dans lequel :
- la ou chaque coupure présente une durée par défaut δt₁, paramétrée dans l'appareil de chauffage ;
- la ou chaque coupure (50) débute à un temps tᵢ₀ avec t₀ ≤ tᵢ₀ < t₁, i étant compris entre 1 et k ;
et
- si à un temps t₃ tel que tᵢ₀ ≤ t₃ ≤ (tᵢ₀ + δt₁), la température mesurée est inférieure ou égale à (Tᵢ₀ - Δ₁T), Tᵢ₀ étant la température au début de la coupure i considérée et Δ₁T étant une valeur paramétrée dans l'appareil de chauffage, alors la ou les éventuelles coupures suivantes sur la plage horaire [t₀ ; t₁] présentent une durée corrigée δt₃, inférieure à la durée par défaut δt₁ (114).

8. Procédé de régulation selon l'une des revendications 2 à 7, dans lequel, si à un temps t₄ tel que t₀ ≤ t₄ ≤ t₁, la température (T) mesurée est inférieure ou égale à (Tc
- Δ₂T), Δ₂T étant une valeur paramétrée dans l'appareil de chauffage, alors les coupures sont interrompues audit temps t₄ (118).

9. Procédé de régulation selon l'une des revendications 2 à 8, dans lequel :
- la ou chaque coupure (50) débute à un temps tᵢ₀ et s'achève par défaut à un temps tᵢ₁, avec t₀ ≤ tᵢ₀ < tᵢ₁ ≤ t₁, i étant compris entre 1 et k ;
et
- si au temps tᵢ₁, la température mesurée est supérieure à (Tᵢ₀ - Δ₃T), Tᵢ₀ étant la température au début de la coupure i considérée et Δ₃T étant une valeur paramétrée dans l'appareil de chauffage, alors la coupure i correspondante est prolongée.

10. Appareil (10) de chauffage comprenant :
- une enveloppe (12) définissant un espace intérieur (22) audit appareil, l'enveloppe comprenant une façade (24) de l'appareil ; l'enveloppe comprenant des ouvertures (26, 28) de circulation d'air entre l'espace intérieur et un extérieur de l'appareil ;
- un premier élément chauffant (16) électrique, disposé dans l'espace intérieur, au contact de la façade (24), et **caractérisé par** une première puissance (P₁) de chauffe ;
- un corps de chauffe (14), formé d'un matériau à inertie thermique et disposé dans l'espace intérieur ;
- un deuxième élément chauffant (18) électrique, en contact thermique avec le corps de chauffe (14) et **caractérisé par** une deuxième puissance (P₂) de chauffe ;
le corps de chauffe étant apte à emmagasiner une chaleur émise par le deuxième élément chauffant et à restituer ladite chaleur à un air extérieur à l'appareil ; et
- un capteur (19) d'une température (T) dudit air extérieur ;
ledit appareil étant muni de moyens (20, 32, 40) de mise en oeuvre d'un procédé selon l'une des revendications précédentes.

11. Appareil de chauffage selon la revendication 10, dans lequel un ratio (P₂/P₁) des puissances de chauffe, du deuxième élément chauffant (18) par rapport au premier élément chauffant (16), est compris entre 1 et 2, plus préférentiellement proche de ou égal à 1,5.

## Patentansprüche

1. Verfahren (100) zur Regelung eines Heizgeräts (10), wobei das Gerät umfasst:
- eine Hülle (12), die einen Innenraum (22) des Geräts definiert, wobei die Hülle umfasst: eine Front (24); und Öffnungen (26, 28) für die Luftzirkulation zwischen dem Innenraum und außerhalb des Geräts;
- ein erstes elektrisches Heizelement (16), das in dem Innenraum in Kontakt mit der Front (24) angeordnet ist und durch eine erste Heizleistung (P₁) gekennzeichnet ist;
- einen Heizkörper (14), der aus einem Material mit thermischer Trägheit gebildet und in dem Innenraum angeordnet ist;
- ein zweites elektrisches Heizelement (18), das in thermischem Kontakt mit dem Heizkörper (14) steht und durch eine zweite Heizleistung (P₂) gekennzeichnet ist;
wobei der Heizkörper imstande ist, eine von dem zweiten Heizelement abgegebene Wärme zu speichern und diese Wärme an eine Luft außerhalb des Geräts abzugeben; und
- einen Sensor (19) für eine Temperatur (T) der Außenluft;
wobei eine Nennleistung (P₀) des Heizgeräts gleich der Summe der ersten und der zweiten Heizleistung ist;
wobei das Verfahren **dadurch gekennzeichnet ist, dass** ein erster Schwellenwert α wie 10 % < α < 70 % in der Heizvorrichtung eingestellt wird; und das Verfahren die folgenden Schritte umfasst:
- für das Heizgerät wird in Abhängigkeit von der Temperatur (T) der Außenluft und einer Solltemperatur (T_{c}), die in dem Heizgerät eingestellt ist, eine Heizleistung (P) bestimmt (104);
- wenn P ≤ αP₀ wird eine Heizpriorität am ersten Heizelement umgesetzt (106); und
- wenn P > αP₀ wird eine Heizpriorität am zweiten Heizelement umgesetzt (108);
wobei eine Heizpriorität am n-ten Heizelement, wobei n aus 1 und 2 ausgewählt ist, derart ist, dass: wenn P ≤ Pₙ, wird nur das n-te Heizelement mit Strom versorgt; und wenn P > Pₙ, gibt das n-te Heizelement eine Leistung Pₙ ab und das andere von dem ersten und zweiten Heizelement gibt eine Leistung ab, die gleich (P - Pₙ) ist.

2. Regelungsverfahren nach Anspruch 1, wobei:
- das Heizgerät eine Uhr (36) umfasst, die imstande ist, eine Zeit (t) zu bestimmen;
- im Heizgerät ein Zeitbereich ([t₀; t₁]) eingestellt ist;
- ein zweiter Schwellenwert β wie α ≤ β ≤ 100 % in der Heizvorrichtung eingestellt ist; und
- das Verfahren einen Schritt (110) umfasst, so dass, wenn bei t = t₀ P(t₀) > βP₀ gilt, dann zwischen t₀ und t₁ die Heizleistung (P) auf den Wert P(t₀) begrenzt ist; und die Stromversorgung des ersten und zweiten Heizelements während einer Anzahl k aufeinanderfolgender Unterbrechungen unterbrochen wird, wobei k eine ganze Zahl größer oder gleich 1 ist, die in der Heizvorrichtung eingestellt ist.

3. Regelungsverfahren nach Anspruch 2, wobei der erste Schwellenwert α nahe bei oder gleich 40 % ist und der zweite Schwellenwert β nahe bei oder gleich 60 % ist.

4. Regelungsverfahren nach Anspruch 2 oder 3, wobei in dem Heizgerät ein Wert γ wie 10 % < γ < 50 % eingestellt wird, so dass die Gesamtdauer (Δt) der Unterbrechungen im Zeitbereich ([t₀; t₁]) gleich γ(t₁ - t₀) ist.

5. Regelungsverfahren nach Anspruch 4, wobei der Wert γ zwischen 20 % und 30 % liegt, vorzugsweise nahe bei oder gleich 25 %.

6. Regelungsverfahren nach einem der Ansprüche 2 bis 5, wobei k eine ganze Zahl größer oder gleich 3 ist.

7. Regelungsverfahren nach einem der Ansprüche 2 bis 6, wobei:
- die oder jede Unterbrechung eine Standarddauer δt₁ aufweist, die im Heizgerät eingestellt ist;
- die oder jede Unterbrechung (50) zu einem Zeitpunkt t₀ mit t₀ < tᵢ₀ < t₁ beginnt, wobei i zwischen 1 und k liegt;
und
- wenn zu einem Zeitpunkt t₃ wie tᵢ₀ < t₃ < (tᵢ₀ + δt₁) die gemessene Temperatur kleiner oder gleich (Tᵢ₀ - Δ₁T) ist, wobei Tᵢ₀ die Temperatur zu Beginn der betrachteten Unterbrechung i ist und Δ₁T ein im Heizgerät eingestellter Wert ist, dann die eventuell folgende(n) Unterbrechung(en) im Zeitbereich [t₀; t₁] eine korrigierte Dauer δt₃ aufweist/aufweisen, die kleiner als die Standarddauer δt₁ (114) ist.

8. Regelungsverfahren nach einem der Ansprüche 2 bis 7, wobei, wenn zu einem Zeitpunkt t₄ wie t₀ ≤ t₄ ≤ t₁ die gemessene Temperatur (T) kleiner oder gleich (Tc - Δ₂T) ist, wobei Δ₂T ein im Heizgerät eingestellter Wert ist, dann die Unterbrechungen zu diesem Zeitpunkt t₄ unterbrochen (118) werden.

9. Regelungsverfahren nach einem der Ansprüche 2 bis 8, wobei: - die oder jede Unterbrechung (50) zu einem Zeitpunkt tᵢ₀ beginnt und standardmäßig zu einem Zeitpunkt tᵢ₁ endet, wobei t₀ ≤ tᵢ₀ ≤ tᵢ₁ ≤ t₁ ist, wobei i zwischen 1 und k liegt;
und
- wenn zum Zeitpunkt tᵢ₁ die gemessene Temperatur größer als (Tᵢ₀ - Δ₃T) ist, wobei Tᵢ₀ die Temperatur zu Beginn der betrachteten Unterbrechung i ist und Δ₃T ein in der Heizvorrichtung eingestellter Wert ist, dann die entsprechende Unterbrechung i verlängert wird.

10. Heizgerät (10), umfassend:
- eine Hülle (12), die einen Innenraum (22) des Geräts definiert, wobei die Hülle eine Front (24) des Geräts umfasst; wobei die Hülle Öffnungen (26, 28) für die Luftzirkulation zwischen dem Innenraum und außerhalb des Geräts umfasst;
- ein erstes elektrisches Heizelement (16), das in dem Innenraum in Kontakt mit der Front (24) angeordnet ist und durch eine erste Heizleistung (P₁) gekennzeichnet ist;
- einen Heizkörper (14), der aus einem Material mit thermischer Trägheit gebildet und in dem Innenraum angeordnet ist;
- ein zweites elektrisches Heizelement (18), das in thermischem Kontakt mit dem Heizkörper (14) steht und durch eine zweite Heizleistung (P₂) gekennzeichnet ist;
wobei der Heizkörper imstande ist, eine von dem zweiten Heizelement abgegebene Wärme zu speichern und diese Wärme an eine Luft außerhalb des Geräts abzugeben; und
- einen Sensor (19) für eine Temperatur (T) der Außenluft;
wobei das Gerät mit Mitteln (20, 32, 40) zur Durchführung eines Verfahrens nach einem der vorhergehenden Ansprüche versehen ist.

11. Heizgerät nach Anspruch 10, wobei ein Verhältnis (P₂/P₁) der Heizleistungen des zweiten Heizelements (18) zu dem ersten Heizelement (16) zwischen 1 und 2 liegt, vorzugsweise nahe bei oder gleich 1,5.

## Claims

1. A method (100) of controlling a heating device (10), said device comprising:
- a casing (12) defining an interior space (22) for said device, the casing comprising: a front panel (24); and openings (26, 28) for circulating air between the interior space and an exterior of the device;
- a first electrical heating element (16), arranged in the interior space, in contact with the front panel (24), and **characterised by** a first heating power (P₁);
- a heating body (14), made of a thermally inert material and arranged in the interior space;
- a second electrical heating element (18) in thermal contact with the heating body (14) and **characterised by** a second heating power (P₂);
the heating body being able to store heat emitted by the second heating element and to release said heat to air outside the device; and
- a sensor (19) for detecting the temperature (T) of said outside air;
a rated power (P₀) of the heating device being equal to the sum of the first and second heating powers;
the method being **characterised in that**: a first threshold α such that 10% < α < 70% is set in the heating device; and the method comprises the following steps:
- a heating power (P) is determined (104) for the heating device as a function of the temperature (T) of the outside air and a setpoint temperature (T_{c}) set in the heating device;
- if P ≤ αP₀, priority is given to heating the first heating element (106); and
- if P > αP₀, priority is given to heating the second heating element (108);
a heating priority for the nth heating element, n being chosen from 1 and 2, such that: if P ≤ Pₙ, only said nth heating element is supplied with electricity; and if P >Pₙ, said nth heating element delivers a power Pₙ and the other of the first and second heating elements delivers a power equal to (P - Pₙ).

2. A control method as claimed in claim 1, wherein:
- the heating device includes a clock (36) capable of determining a time (t);
- a time window ([t₀; t₁]) is set in the heating device;
- a second threshold β such that α ≤ β ≤ 100% is set in the heating device; and
- the method comprises a step (110) such that, if at time t = t₀ we have P(t₀) > βP₀, then, between t₀ and t₁, the heating power (P) is limited to said value P(t₀); and the electrical supply to the first and second heating elements is interrupted during a number k of successive interruptions, where k is an integer greater than or equal to 1, configured in the heating device.

3. Regulation method according to claim 2, in which the first threshold a is close to or equal to 40% and the second threshold β is close to or equal to 60%.

4. Regulation method according to claim 2 or 3, in which a value γ such that 10% < γ < 50% is set in the heating device, so that the total duration (Δt) of the interruptions over the time period ([t₀; t₁]) is equal to γ(t₁ - t₀).

5. Control method according to claim 4, wherein the value γ is between 20% and 30%, preferably close to or equal to 25%.

6. Control method according to one of claims 2 to 5, in which k is an integer greater than or equal to 3.

7. Control method according to one of claims 2 to 6, in which:
- the or each break has a default duration δt₁, set in the heating device;
- the or each interruption (50) starts at a time tᵢ₀ with t₀ < tᵢ₀ < t₁, i being between 1 and k;
and
- if, at a time t₃ such that tᵢ₀ - t₃ < (tᵢ₀ + δt₁), the measured temperature is less than or equal to (Tᵢ₀ - Δ₁T),Tᵢ₀ being the temperature at the start of the interruption i in question and Δ₁T being a value set in the heating device, then any subsequent interruption(s) over the time range [t₀; t₁] have a corrected duration δt₃, less than the default duration δt₁ (114).

8. Regulation method according to one of claims 2 to 7, in which, if at a time t₄ such that t₀ ≤ t₄ ≤ t₁, the measured temperature (T) is less than or equal to (Tc - Δ₂T), where Δ₂T is a value configured in the heating device, then the interruptions are stopped at said time t₄ (118).

9. Regulation method according to one of claims 2 to 8, in which:
- the or each interruption (50) starts at a time tᵢ₀ and ends by default at a time tᵢ₁, with t₀ ≤ tᵢ₀ ≤ tᵢ₁ ≤ t₁, i being between 1 and k;
and
- if, at time tᵢ₁, the measured temperature is greater than (Tᵢ₀ - Δ₃T), Tᵢ₀ being the temperature at the start of the interruption i in question and Δ₃T being a value set in the heating device, then the corresponding interruption i is extended.

10. A heating device (10) comprising:
- a casing (12) defining an interior space (22) for said device, the casing comprising a front panel (24) of the device; the casing comprising openings (26, 28) for the circulation of air between the interior space and an exterior of the device
- a first electrical heating element (16), arranged in the interior space, in contact with the front panel (24), and **characterised by** a first heating power (P₁);
- a heating body (14), made of a thermally inert material and arranged in the interior space;
- a second electrical heating element (18) in thermal contact with the heating body (14) and **characterised by** a second heating power (P₂);
the heating body being able to store heat emitted by the second heating element and to release said heat to air outside the device; and
- a sensor (19) for detecting the temperature (T) of said outside air;
said device being provided with means (20, 32, 40) for implementing a method according to one of the preceding claims.

11. A heating device according to claim 10, in which a ratio (P₂/P₁) of the heating powers of the second heating element (18) relative to the first heating element (16) is between 1 and 2, more preferably close to or equal to 1.5.
